# EUROPÄISCHE PATENTANMELDUNG

(11) **EP 2 279 887 A1**
(43) Veröffentlichungstag der Anmeldung: **02.02.2011**
(21) Anmeldenummer: 10170079.7
(22) Anmeldetag: 20.07.2010
(51) Int. Cl.: B60K 11/08, B60K 11/04

(54) **Wärmeübertrager**

(30) Priorität: 28.07.2009 DE 102009035086
(71) Anmelder: Behr GmbH & Co. KG, 70469 Stuttgart (DE)
(72) Erfinder: Ghiani, Franco, 74321, Bietigheim-Bissingen (DE)
(74) Vertreter: Grauel, Andreas

(57) **Zusammenfassung**

Die Erfindung betrifft einen Wärmeübertrager (1, 8, 15, 18, 28, 31, 32) für Kraftfahrzeuge mit zumindest einem flächig ausgebildeten Wärmeübertragungsnetz (2, 33) sowie zumindest einer von zumindest einem Aktuator (10, 11, 19) veränderbaren Luftströmungsbeinflussungsvorrichtung (3, 33). Zumindest eine Luftströmungsbeeinflussungsvorrichtung (3, 33) ist in einem Außenbereich der Wärmeübertragervorrichiug (1, 8, 15, 18, 28, 31, 32) ausgebildet.

## Beschreibung

Die Erfindung betrifft eine Wärmeübertragervorrichtung, insbesondere eine Wärmeübertragervorrichtung für Kraftfahrzeuge, welche zumindest eine flächig ausgebildetes Wärmeübertragungsnetz sowie zumindest eine von zumindest einem Aktuator veränderbare Luftströmungsbeeinflussungsvorrichtung aufweist.

Wärmeübertragervorrichtungen, insbesondere auch Wärmeübertragervorrichtungen für Kraftfahrzeuge sind bekannt und weithin verbreitet. Sie werden verwendet, um Fluide (Gase, Flüssigkeiten, Gemische aus Gasen und Flüssigkeiten, überkritische Fluide; wobei die Fluide auch bis zu einem gewissen Grad Festkörper in Partikelform aufweisen können) zu erwärmen bzw. abzukühlen.

Ein Beispiel unter vielen sind Ladeluftkühler sowie Abgaskühler im Kraftfahrzeugbereich. Typischerweise handelt es sich bei derartigen Wärmeübertragern um Wärmeübertrager, bei denen beide der involvierten Fluide in Form eines Gases vorliegen. Es gibt jedoch auch Sonderbauformen von Ladeluftkühlern bzw. Abgaskühlern, bei denen auch ein in der Regel in flüssiger Form vorliegendes Fluid zur Temperaturveränderung der (gasförmigen) Ladeluft bzw. des (gasförmigen) Abgases verwendet wird.

Oftmals tritt bei Wärmeübertragern das Problem auf, dass deren maximale Wärmeübertragungsleistung bei gewissen Betriebszuständen der Anlage reduziert werden muss. Im Falle von Ladeluftkühlern kann es beispielsweise erforderlich sein, dass unmittelbar nach dem Startvorgang des Motors, insbesondere bei niedrigen Außentemperaturen, die Ladeluft weniger stark gekühlt werden muss, um so den Motor schneller auf Betriebstemperatur bringen zu können. Ein weiterer Anwendungsfall für eine derartige Reduktion der Leistung eines Ladeluftkühlers findet sich in zunehmendem Maße bei Pkw-Dieselmotoren, die zur Verringerung des Rußausstoßes mit Partikeifiltern ausgerüstet sind, die in bestimmten Intervallen regeneriert werden müssen. Bei der Regeneration durch Rußabbrand ist eine Anhebung der Abgastemperatur erforderlich, die durch eine verringerte Abkühlung der Ladeluft erzielt werden kann.

Abgaskühler werden beispielsweise verwendet, wenn ein Teil des Abgases auf die Ansaugseite des Motors zurückgeführt wird. Eine derartige Abgasrückführung wird häufig zur Verringerung des Schadstoffausstoßes des Motors genutzt. Auch hier kann es sich - analog zum Ladeluftkühler - als vorteilhaft enweisen, wenn die Kühlleistung des Abgaskühlers zeitweise reduziert werden kann.

Ladelüftkühler mit variabler Kühlleistung als solche sind bereits bekannt. Beispielsweise ist in WO 2005/033489 A1 ein Ladeluftkühler eines Kraftfahrzeugs beschrieben, der aus einem Wärmeübertragerblock mit von Ladeluft durchströmbaren Rohren und aus mit den Rohren verbundenen Luftkästen, die eine Ladelufteinlass und einen Ladeluftauslass aufweisen, aufgebaut ist. Dabei ist ein Teil der Rohre verschließbar ausgeführt. Dies wird beispielsweise mittels eines im Luftkasten angeordneten Absperrorgans realisiert. Nachteilig ist es dabei, dass bei einer Verstellung der Kühlleistung des Wärmeübertragers der Luftdurchtrittsquerschnitt für die Ladeluft reduziert wird, und daher die Motorleistung absinken kann.

Auch in DE 103 55 649 B4 ist ein vorliegend als Abgaskühler ausgebildeter Wärmeübertrager beschrieben, dessen Kühlleistung verändert werden kann. Dazu ist ein Bypasskanal für die Abgase vorgesehen, wobei mittels eines Stellelements die Öffnung des Bypasskanals verschlossen oder geöffnet werden kann. Auch Zwischenstellungen sind vorgesehen. Auch hier kann bei einer Verstellung der Kühlleistung des Wärmeübertragers der Luftdurchtrittsquerschnitt für die Ladeluft variieren.

Bekannte Wärmeübertragervorrichtungen mit variabler Kühlleistung weisen jedoch nach wie vor unterschiedliche Nachteile auf, wie beispielsweise einen großen erforderlichen Bauraum, einen komplexen Aufbau, schlechte Variabilität der Wärmeübertragungsleistung, hohe Herstellungskosten, komplexe Ansteuerung, Veränderung des Luftdurchtrittsquerschnitts für die Ladeluft usw..

Es ist daher die Aufgabe der Erfindung eine gegenüber dem Stand der Technik verbesserte Wärmeübertragervorrichtung vorzuschlagen.

Dazu wird vorgeschlagen eine Wärmeübertragervorrichtung, insbesondere eine Wärmeübertragervorrichtung für Kraftfahrzeuge, welche zumindest ein flächig ausgebildetes Wärmeübertragungsnetz sowie zumindest eine von zumindest einem Aktuator veränderbare Luftströmungsbeeinflussungsvorrichtung aufweist, derart auszubilden, dass zumindest eine Luftströmungsbeeinfiussungsvorrichtung in einem Außenbereich der Wärmeübertragervorrichtung ausgebildet ist. Wie allgemein üblich weist auch die vorgeschlagene

Wärmeübertragervorrichtung ein sogenanntes Wärmeübertragungsnetz (beziehungsweise einen Wärmeübertragerblock) auf, welches üblicherweise aus Rohren (in der Regel Flach- oder Rechteckrohre) besteht, die mit einem gewissen Abstand zueinander angeordnet sind. Aufgrund der Abstände der Rohre entstehen Öffnungen, durch die Luft senkrecht zur Ebene des Wärmeübertragerblocks hindurch strömen kann. In aller Regel sind zwischen den Rohren sogenannte Wellrippen angeordnet, die der Vergrößerung der Wärmeaustauschfläche dienen. Die Rohre sind bei dieser Bauausführung in aller Regel in sogenannten Rohrböden gehalten, auf die sogenannte Luftkästen aufgesetzt werden, die als Verteiler oder Sammelkästen für ein Fluid, wie beispielsweise für Ladeluft oder Abgase fungieren. Während es grundsätzlich möglich ist, die Rohre, Wellrippe, Rohrböden und/oder Luftkästen aus einem beliebigen Material zu fertigen (wie beispielsweise Buntmetalle und/oder Stahl) werden heutzutage meist Aluminium bzw. Aluminiumlegierungen verwendet. Die Luftströmungsbeeinfiussungsvorrichtung kann ebenfalls in an sich beliebiger Weise ausgeführt werden und dient der Veränderung (z. Bsp. Verringerung) der Wärmeaustauschleistung der Wärmeübertragervorrichtung. Beispielsweise kann die Luftströmungsbeeinffussungsvorrichtung den Luftdurchtrittsquerschnitt eines oder beider der beteiligten Fluide verringern und auf diese Weise die Wärmeübertragungsleistung verringern. Zumindest eine der Luftströmungsbeeinflussungsvorrichtungen wird dabei in einem Außenbereich der Wärmeübertragervorrichtung ausgebildet. Dies hat den Vorteil, dass sich der Luftdurchtrittsquerschnitt für das bei.. spielsweise abzukühlende, die Rohre durchströmende Fluid weniger stark geändert werden muss und/oder sogar im wesentlichen beibehalten werden kann. Dadurch ist es beispielsweise möglich, die Leistung des Verbrennungsmotors konstanter halten zu können (auch wenn die Kühlleistung des Ladeluftkühlers verringert wird). Zur Variation der Luftströmungsbeeinflussungsvorrichtung - und damit der Wärmeübertragungsleistung der Wärmeübertragervorrichtung - kann ein Aktuator vorgesehen werden.

Eine vorteilhafte Bauform kann sich ergeben, wenn bei der Wärmeübertragervorrichtung zumindest eine der in einem Außenbereich der Wärmeübertragervorrichtung ausgebildeten Luftströmungsbeeinflussungsvorrichtungen vor und/oder hinter dem Wärmeübertragungsnetz angeordnet ist. Durch eine derartige Anordnung ist es möglich, eine besonders große Variation der Wärmeübertragungsleistung der Wärmeübertragervorrichtung realisieren zu können. Die Luftströmungsbeeinflussungsvorrichtung kann dabei in beliebiger Weise das Wärmeübertragungsnetz im Wesentlichen vollständig und/oder nur teilweise überdecken (insbesondere im "geschlossenen" Zustand der Luftströmungsbeeinflussungsvorrichtung).

Möglich ist es, dass zumindest ein Aktuator als fluidbefüllbare, volumenveränderliche Einrichtung ausgebildet ist, welche bevorzugt zumindest teilweise in einem Umfangbereich des Wärmeübertragungsnetzes angeordnet ist.. Die volumenveränderliche Einrichtung kann beispielsweise mit einem Gas oder einem Gas-/Flüssigkeitsgemisch gefüllt werden, welches bei einer Temperaturveränderung relativ starke Volumenveränderung aufweist. Dabei kann die volumenveränderliche Einrichtung über ein Fluidrohr mit einem weiteren Hohlkörper (ebenfalls mit dem gleichen Material gefüllt) verbunden werden, der in der Nähe von der temperaturgebenden Einrichtung, aufgrund deren Temperatur die Luftströmungsbeeinflussungsvorrichtung verstellt werden soll, platziert werden kann. Mit einem derartigen Aufbau ist es auf besonders einfache Weise möglich, eine temperaturabhängige Verstellung (gegebenenfalls Fernverstellung) der Luftströmungsbeeinflussungsvorrichtung vorzunehmen. Möglich ist es jedoch auch, dass anderweitige druckgebende Einrichtungen verwendet werden, wie beispielsweise eine über ein Steuerventil erfolgende Verbindung mit einer Druckluftquelle (wozu beispielsweise auch unter Druck gesetzte Ladeluft verwendet werden kann). Wird - wie vorgeschlagen - die volumenveränderliche Einrichtung zumindest teilweise in einem Umfangsbereich des Wärmeübertragungsnetzes, so kann es vermieden werden, dass diese den maximal möglichen Luftdurchtrittsquerschnitt für die Außenluft dauerhaft verringert (also "der Luftströmung im Weg steht"). Dadurch kann die maximale Wärmeübertragungsleistung der Wärmeübertragervorrichtung erhöht werden. Darüber hinaus ist es möglich, die für die Wärmeübertragervorrichtung erforderliche Bautiefe zu verringern. Gerade in der Tiefe steht oftmals ein nur geringer Bauraum zur Verfügung.

Eine vorteilhafte Weiterbildung der Wärmeübertragervorrichtung ergibt sich, wenn zumindest eine volumenveränderliche Einrichtung als Balgelement ausgebildet ist und/oder als winkeiverändertiche keilförmige Einrichtung ausgebildet ist. Balgelemente haben sich bewährt, wenn Volumenveränderungen in relativ große, insbesondere in einer Längsrichtung erfolgende Stellbewegungen umgewandelt werden sollen. Bei einer Bauausführung als winkelveränderliche keilförmige Einrichtung kann eine besonders einfache Anordnung der volumenveränderlichen Einrichtung an einer Seite der Wärmeübertragervorrichtullg realisiert werden, ohne dass relativ aufwändige Umlenkmechanismen erforderlich werden. Selbstverständlich ist es auch möglich, die winkelveränderliche keilförmige Einrichtung zumindest teilweise unter Verwendung von Balgelementen auszuführen.

Vorteilhaft ist es, wenn bei der Wärmeübertragervorrichtung zumindest eine volumenveränderliche Einrichtung als formschlüssig befestigbare Einrichtung, insbesondere als steckbare und/oder clipsbare Einrichtung ausgebildet ist. In diesem Fall ist eine besonders einfache (nachträgliche) Montage der volumenveränderlichen Einrichtung an der Wärmeübertragervorrichtung möglich. Eine nachträgliche Montage ermöglicht es insbesondere, dass (Teile) der volumenveränderliohen Einrichtung aus temperaturempfindlichen Materialien gefertigt werden können (Wärmeübertragervorrichtungen werden üblicherweise bei hohen Temperaturen gelötet), wie beispielsweise aus einem thermoplastischen Kunststoffmaterial. Auch ist es möglich, ein und dieselbe Bauform einer Wärmeübertragervorrichtung nach Belieben mit einer volumenveränderlichen Einrichtung oder ohne eine solche auszuführen. Dies ist beispielsweise von Relevanz, wenn eine gleichartige Wärmeübertragervorrichtung für Motoren mit unterschiedlicher Leistung verwendet werden soll.

Vorteilhaft ist es, wenn die Wärmeübertragervorrichtung zumindest teilweise als Ladeluftkühler und/oder als Abgaskühler ausgebildet ist. Gerade für derartige Wärmetauscher ist es sinnvoll, zu bestimmten Zeitpunkten gezielt die maximal mögliche Wärmeübertragungskapazität reduzieren zu können.

Eine vorteilhafte Ausführungsform der Wärmeübertragervorrichtung ergibt sich, wenn die Fluidrohre und die Luftdurchtrittsbereiche zumindest eines Wärmeübertragungsnetzes zumindest bereichsweise äquidistant ausgebildet sind. Eine derartige Bauausführung ist oftmals besonders vorteilhaft, wenn zwei gleichartige Fluide (z. Bsp. zwei Gase) mit einer gegebenenfalls gleichartigen Dichte miteinander in Wärmewechseiwirkung treten sollen.

Vorteilhaft ist es weiterhin, wenn bei zumindest einer Wärmeübertragervorrichtung zumindest Teile zumindest einer Luftströmungsbeeinflussungsvorrichtung verschiebbar angeordnet sind. Auf diese Weise ist es möglich, dass mit einer relativ kleinen Verstellbewegung eine große Variation der Wärmeübertragungsleistung ermöglicht wird.

Möglich ist es insbesondere, dass zumindest eine Luftströmungsbeeinflussungsvorrichtung zumindest bereichsweise als eine Luftdurchtrittsöffnungen aufweisende Einrichtung ausgebildet ist. Insbesondere kann die Luftströmungsbeeinftussungsvorrichtung als gitterartige Jalousieneinrichtung ausgebildet sein. Mit einer derartigen Bauausführung ist es insbesondere möglich, mit einer sehr kleinen Verstellbewegung eine besonders große Verstellwirkung zu bewirken. Dadurch kann mit einer kleinen Verstellbewegung eine besonders große Veränderung des Luftdurchtritts und damit der Wärmeübertragungsleistung der Wärmeübertragervorrichtung realisiert werden. Zusätzlich oder alternativ kann bei einer Wärmeübertragervorrichtung, die zumindest ein flächig ausgebildetes Wärmeübertragungsnetz sowie zumindest eine von zumindest einem Aktuator veränderbare Luftströmungsbeeinflussungsvorrichtung aufweist, zumindest eine Klemmschutzeinrichtung vorgesehen werden. Diese Klemmschutzvorrichtung kann insbesondere zwischen zumindest einem Aktuator und zumindest einer Luftströmungsbeeinflussungsvorrichtung angeordnet werden. Oftmals kann es aufgrund unterschiedlicher Umstände dazu führen, dass die Luftströmungsbeeinflussungsvorrichtung zeitweise nicht bewegt werden kann und/oder nicht über ihren gesamten Verstellweg hinweg bewegt werden kann. Mit einer Klemmschutzeinrichtung ist es möglich, dass trotz einer derartigen "verklemmten" Luftströmungsbeeinftussungsvorrichtung der Aktuator einen unvollständigen Verstellweg durchführen kann. Die Klemmschutzeinrichtung kann dann die "Wegdifferenz" vorzugsweise reversibel aufnehmen. Dadurch kann eine Beschädigung und/oder Zerstörung von Einrichtungen, insbesondere mechanischen Koppeleinrichtungen, vermieden werden.

insbesondere ist es möglich, dass zumindest eine Klemmschutzeinrichtung ein elastisch verformbares Element, insbesondere eine Federeinrichtung wie bevorzugt eine Spiralfeder aufweist. Mit einer derartigen Bauausführung ist es auf besonders einfache Weise möglich, eine reversible Kompensation der "Wegdifferenz" zu realisieren.

Weiterhin wird zusätzlich oder alternativ vorgeschlagen, dass bei einer Wärmeübertragervorrichtung, die zumindest ein flächig ausgebildetes Wärmeübertragungsnetz sowie zumindest eine von zumindest einem Aktuator veränderbare Luftströmungsbeeinftussungsvorrichtung aufweist, zumindest eine Luftströmungsbeeinflussungsvorrichtung als Wärmeübertragervorrichtung ausgebildet ist. Insbesondere bei speziellen Bauformen (insbesondere bei Bauformen von Wärmeübertragervorrichtungen, welche ein im Wesentlichen äquidistant ausgebildetes Wärmeübertragungsnetz aufweisen), kann anstelle einer ausschließlich der Luftströmungsbeeinflussung dienenden Luftströmungsbeeinflussungsvorrichtung eine zweite Wärmeübertragervorrichtung verwendet werden, welche in Kooperation mit der ersten Wärmeübertragervorrichtung als Luftströmungsbeeinflussungsvorrichtung dient. Dadurch ist es insbesondere möglich, den Bauraum nochmals zu verringern.

Besonders vorteilhaft ist es dabei, wenn zumindest zwei der Wärmeübertragervorrichtungen gleichartig ausgebildet sind, insbesondere hinsichtlich des Aufbau des Wärmeübertragungsnetzes, besonders bevorzugt in Bezug auf die Dimensionierungen von Fluidrohren und deren Abstände zueinander (mit anderen Worten der Größe der Wellrippenbereiche).

Im Folgenden wird die Erfindung anhand vorteilhafter Ausführungsbeispiele und unter Bezugnahme auf die beigefügte Zeichnung näher erläutert Es zeigt:
- Fig. 1:: ein erstes Ausführungsbeispiel für einen Wärmetauscher mit Luftjalousie im schematischen Querschnitt;
- Fig. 2:: ein zweites Ausführungsbeispiel für einen Wärmetauscher mit Luftjalousie im schematischen Querschnitt;
- Fig. 3:: ein drittes Ausführungsbeispiel für einen Wärmetauscher mit Luftjalousie im schematischen Querschnitt;
- Fig. 4:: ein viertes Ausführungsbeispiel für einen Wärmetauscher mit Luftjalousie im schematischen Querschnitt;
- Fig. 5:: ein Ausführungsbeispiel für ein winkelveränderliches Balgele- ment in schematischer, perspektivischer Ansicht;
- Fig. 6:: ein fünftes Ausführungsbeispiel für einen Wärmetauscher mit Luftjalousie im schematischen Querschnitt;
- Fig. 7:: ein Ausführungsbeispiel für eine Anordnung aus mehreren Wärmeübertragern mit einer gemeinsamen Luftjalousie in schematischem Querschnitt;
- Fig. 8:: ein Ausführungsbeispiel für eine Anordnung aus Wärmeübert- ragern, welche einander jeweils als Luftjalousie dienen in schematischem Querschnitt.

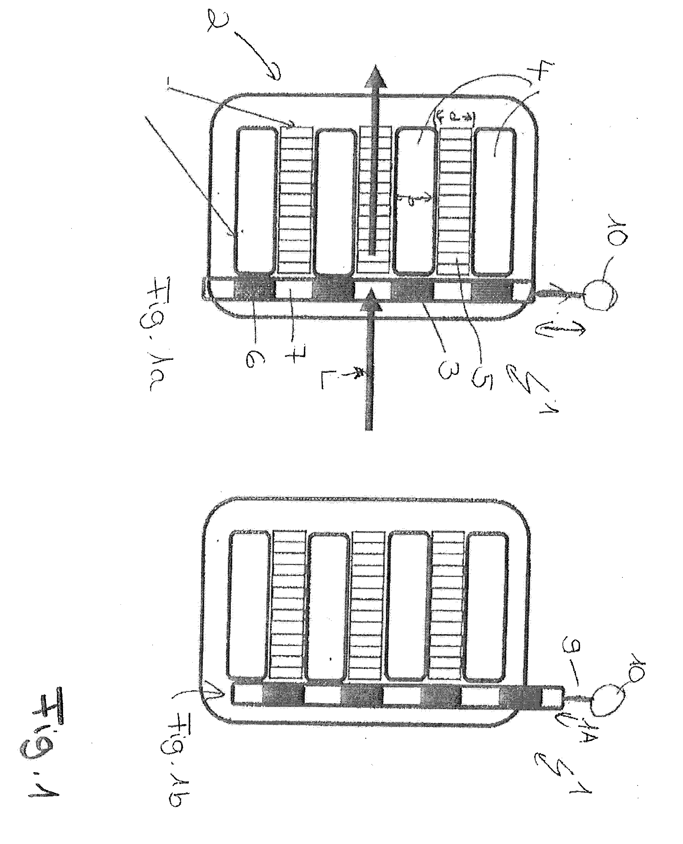

Fig. 1 zeigt ein erstes Ausführungsbeispiel für einen Wärmetauscher 1 in zwei unterschiedlichen Stellungen, jeweils in schematischer Querschnittsansicht. In Fig. 1a ist der Wärmetauscher 1 in einer Luftdurchtrittsstellung dargestellt, wohingegen der Wärmetauscher 1 in Fig. 1b in einer Luftsperrstellung dargestellt ist.

Der Wärmetauscher 1 weist ein Wärmetauschernetz 2 auf, welches aus einer Mehrzahl von Wärmetauscherrohren mit vorliegend rechteckförmigem Querschnitt aufgebaut ist. Durch die Wärmetauscherrohre 4 kann ein erstes Fluid, beispielsweise in einem Turbolader aufgeladene Ladeluft für einen Verbrennungsmotor, hindurch geführt werden. Aufgrund der Turboaufladung der Ladeluft weist diese eine hohe Temperatur auf, was die Dichte der Luft entsprechend verringert. Dadurch kommt es üblicherweise zu Leistungseinbußen des Verbrennungsmotors. Deshalb wird die Ladeluft vor deren Zuführung zum Verbrennungsmotor vorteilhafterweise zunächst abgelsühlt. Die Wärmetauscherrohre 4 führen in (vorliegend nicht dargestellte) Sammelkästen, die jeweils einen Flansch zur Verbindung mit einem Rohr bzw. einem Schlauch aufweisen. Die einzelnen Wärmetauscherrohre 4 sind jeweils in einem Abstand d zueinander angeordnet. In vorliegend dargestelltem Ausführungsbeispiel entspricht der Abstand d zweier Wärmetauscherrohre 4 in etwa der Breite b (im vorliegenden Fall das Außenmaß) eines Wärmetauscherrohrs 4. Zwischen den Wärmetauscherrohren 4 kann Außenluft hindurch geführt werden, um die aufgeladene, heiße Ladeluft abzukühlen. Die Luftströmung L der Außenluft ist in Fig. 1 durch Pfeile L veranschaulicht. Um die Wärmeübertragungsleistung des Wärmetauschers 1 zu erhöhen ist jeweils zwischen zwei Wärmetauscherrohren 4 eine sogenannte Wellrippe 5 angeordnet. Diese erhöhen den thermischen "Kontakt" mit der hindurch strömenden Luft L, und vergrößern dadurch den Wärmeübergang zwischen Ladeluft und hindurch strömender Luft, sodass die Ladeluft in den Wärmetauscherrohren 4 stärker abgekühlt werden kann.

Vor dem Wärmetauschernetz 2 des Wärmetauschers 1 ist eine Luftjalousie 3 angeordnet, welche in einer parallel zur Ebene des Wärmetauschernetzes 2 verlaufenden Ebene verschoben werden kann (durch den Doppelpfeil A angedeutet). Die Luftjalousie 3 ist gitterartig aufgebaut, das heißt die Stege 6 der Luftjalousie 3 sowie die Ausnehmungen 7 der Luftjalousie 3 verlaufen parallel zu den Wärmetauscherrohren 4 bzw. den Wellrippen 5. Wie man Fig. 1 entnehmen kann, entspricht die Breite eines Stegs 6 bzw. die Breite einer Ausnehmung 7 dem Abstand d zweier Wärmetauscherrohre 4 zueinander bzw. der Breite b eines Wärmetauscherrohrs 4.

Die Bewegung der Luftjalousie 3 in Richtung des Doppelpfeils A erfolgt durch einen Aktuator 10, der über ein Koppelelement 9 mit der Luftjalousie 3 verbunden ist. Bei dem Aktuator 10 kann es sich beispielsweise um einen Servomotor oder dergleichen handeln.

Wenn, wie in Fig. 1a dargestellt, die Stege 6 der Luftjalousie 3 vor den Wärmetauscherrohren 4 liegen, und damit die Ausnehmungen 7 der Luftjalousie 3 fluchtend zu den Wellrippen 5 des Wärmetauschernetzes 2 liegen, so kann ein maximaler Luftstrom L durch den Wärmetauscher 1 hindurch treten. Die Kühlleistung des Wärmetauschers 1 ist somit maximal.

Wird dagegen, wie in Fig. 1b dargestellt, die Luftjalousie 3 um eine Länge b bzw. d in Richtung des Doppelpfeils A verschoben, so kommen nunmehr die Stege 6 der Luftjalousie 3 vor den Wellrippen 5 zu liegen, während sich die Ausnehmungen 7 der Luftjalousie 3 vor den Wärmetauscherrohren 4 befinden. In dieser Position ist die Luftdurchströmung durch den Wärmetauscher 1 im Wesentlichen unterbunden. Lediglich durch gegebenenfalls verbleibende Spalte hindurch kann noch eine kleine Luftdurchströmung erfolgen.

Selbstverständlich ist es auch möglich, dass die Luftjalousie 3 in Positionen verschoben wird, die sich zwischen den beiden in Fig. 1a bzw. Fig. 1b gezeigten Extremen befinden. Die Luftdurchströmung L durch den Wärmetauscher 1 kann somit in weiten Grenzen variiert werden.

Die in Fig. 1 ersichtliche Anordnung der Luftjalousie 3 in einem Außenbereich des Wärmetauschers 1 hat den Vorteil, dass lediglich der Luftdurchtrittsquerschnitt für die durchströmende Außenluft L verringert wird. Der Luftdurchtrittsquerschnitt durch die Wärmetauscherrohre 4 hindurch bleibt jedoch unverändert. Falls der Wärmetauscher 1 beispielsweise als Ladeluftkühler für einen Verbrennungsmotor verwendet wird, kommt es somit zu keiner Leistungseinbuße des Motors durch eine Verringerung des Luftdurchtrittsquerschnitts durch die Wärmetauscherrohre 4 hindurch (welche ja zusätzlich zur ohnehin erfolgenden Leistungseinbuße aufgrund der Temperaturerhöhung und damit Dichteverringerung der Ladeluft aufträte). Es ist leicht einsichtig, dass dies von Vorteil ist.

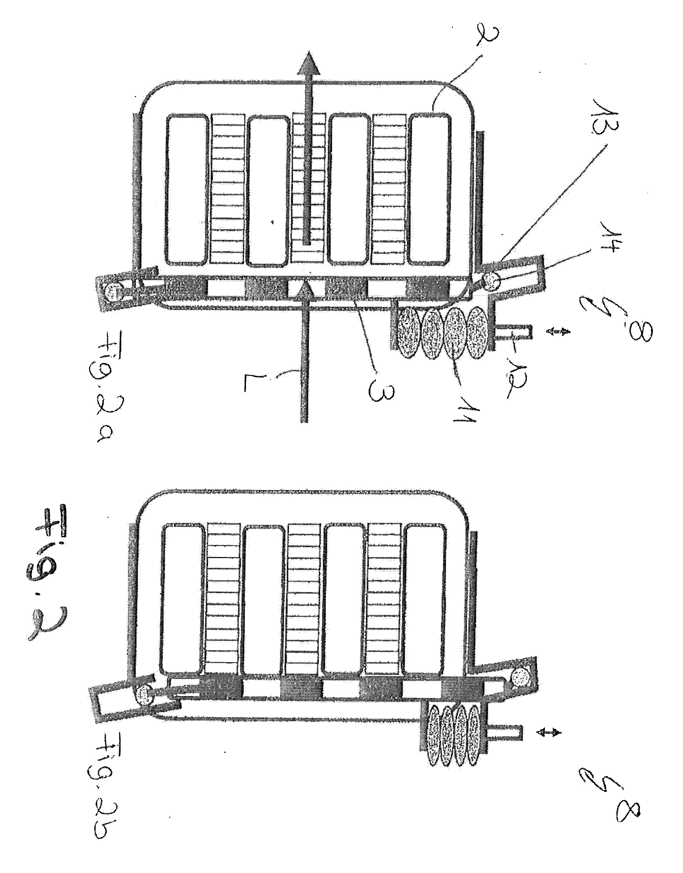

In Fig. 2 ist ein zweites Ausführungsbeispiel für einen Wärmetauscher 8 in einer schematischen Querschnittsansicht dargestellt. Auch hier ist der Wärmetauscher in Fig. 2a in einer Luftdurchtrittsstellung dargestellt, wohingegen er sich in Fig. 2b in einer Luftsperrstellung befindet. Die Funktionsweise von Wärmetauschernetz 2, Luftjalousie 3 und deren relativer Positionierung zueinander ähnelt dem in Fig. A dargestellten Ausführungsbeispiel.

Im vorliegend dargestellten Ausführungsbeispiel wird zur lineare Bewegung der Luftjalousie 3 ein Luftbalg 11 verwendet, der über einen Verbindungsflansch 12 mit einem Fluid (beispielsweise mit einem Gas oder einem Luft- /Gasgemisch) unterschiedlich stark befüllt werden kann, vorgesehen. Der Verbindungsflansch 12 kann beispielsweise mit einer (nicht dargestellten) Fluidleitung wie einem Rohr oder einem Schlauch verbunden werden, der zu einem geeigneten Gasreservoir oder Pumpe führen kann. Je nach Befüllungsgrad des Luftbalgs 11 befindet sich die Luftjalousie 3 in einer Luftdurchtrittsstellung (Fig. 2a) oder einer Luftsperrstellung (Fig. 2b). Zusätzlich ist in Fig. 2 noch eine (optionale) Führungskulisse 13 vorgesehen, in der korrespondierend ausgebildete Führungselemente 14, die mit der Luftjalousie 3 verbunden sind, geführt werden. In vorliegend dargestellten Ausführungsbeispiel ist die Führungskulisse 13 derart ausgebildet, dass sich die Luftjalousie 3 in der Luftdurchtrittsstellung (Fig. 2a) in einem größeren Abstand von den Wärmetauscherrohren 4 befindet, als dies in der Luftsperrstellung (Fig. 2b) der Fall ist. Dies kann die Dichtigkeit des Wärmetauschers 1 in der Verschlussstellung, bzw. die Strömungscharakteristik des Wärmetauschers 1 in der Luftdurchtrittsstellung verbessern. Selbstverständlich ist es auch denkbar, dass nur eine einzelne Führungskulisse 13 (auf einer beliebigen Seite des Wärmetauschernetzes 2) vorgesehen werden kann.

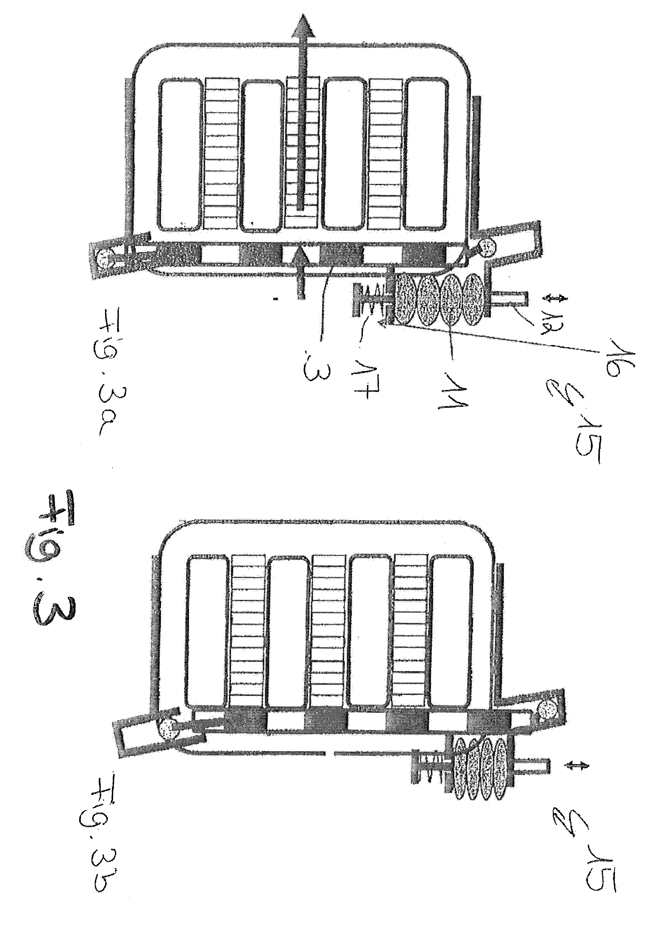

In Fig. 3 ist ein nochmals modifizierter Wärmetauscher 15, jeweils in schematischer Querschnittsansicht in einer Luftdurchtrittsstellung (Fig. 3a) sowie in einer Luftsperrstellung (Fig. 3b) dargestellt. Der Aufbau des vorliegend dargestellten Wärmetauschers 15 entspricht weitgehend dem Aufbau des in Fig. 2 dargestellten Wärmetauschers 8. Zusätzlich ist bei dem in Fig. 3 dargestellten Wärmetauscher 15 ein Klemmschutz 16 dargestellt. Bei dem Klemmschutz 16 handelt es sich im Wesentlichen um eine elastisch reversibel verformbare Einrichtung, vorliegend eine Spiralfeder 17, die zwischen dem Luftbalg 11 (Aktuator) und der Luftjalousie 3 angeordnet ist. Wenn beispielsweise die Luftjalousie 3 an den Vorderseiten der Wärmetauscherrohre 4 festgefroren ist (was beispielsweise in den gemäßigten Breitengraden bei einem im Freien abgestellten Kraftfahrzeug in einer Winternacht ohne weiteres möglich ist), so kann eine Verformung des Luftbalgs oder Aktuator 11 erfolgen, ohne dass sich die Luftjalousie 3 zwangsläufig mit bewegen muss. Dadurch können insbesondere Beschädigungen des Luftbalgs 11, der Luftjalousie 3 oder auch der fluidzuführenden Einrichtung, die dem Balgelement 11 über den Verbindungsflansch 12 ein Fluid zuführt, vermieden werden.

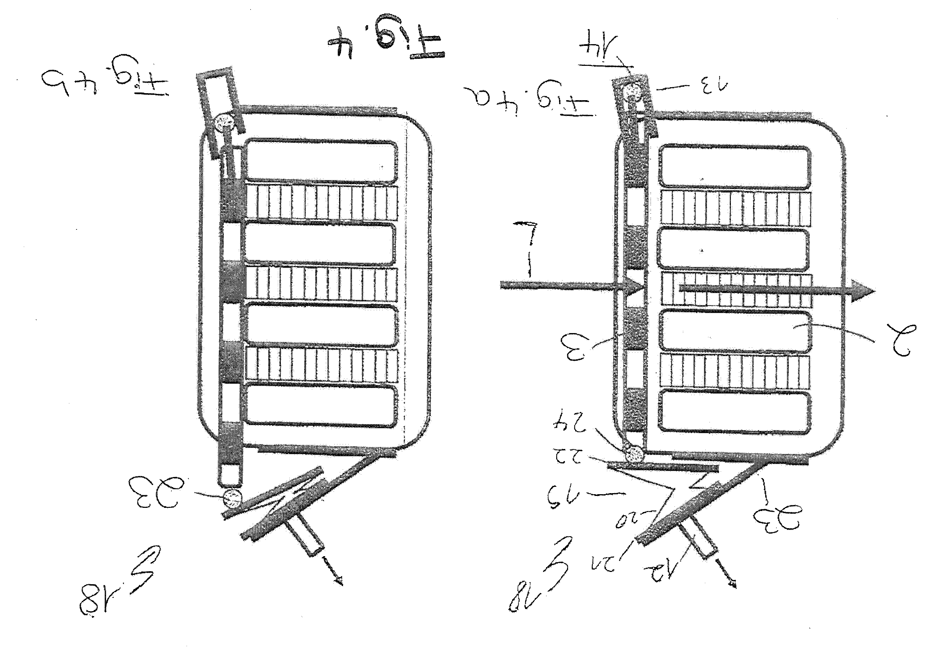

In Fig. 4 ist ein weiteres Ausführungsbeispiel für einen Wärmetauscher 18 sowohl in einer Luftdurchtrittsstellung (Fig. 4a), als auch in einer Luftsperrstellung (Fig. 4b), jeweils in schematischem Querschnitt dargestellt. Auch das vorliegend dargestellte Ausführungsbeispiel eines Wärmetauschers 18 ähnelt den vorab beschriebenen Ausführungsbeispielen 1, 8, 15.

Die wesentliche Modifikation des vorliegend dargestellten Wärmetauschers 18 besteht in der Bauausführung des Luftbalgs 19. Dieser weist elastische Seitenwände 20 auf, die jeweils an einer starren Deckplatte 21 bzw. einer starren Bodenplatte 22 befestigt sind. Die Deckplatte 21 ist mit einer Halterung 23 verbunden, während die Bodenplatte 22 des Luftbalgs 19 über ein Verbindungselement 24 mit der Luftjalousie 3 verbunden ist. Aufgrund der Ausbildung und der Lagerung des Luftbalgs 19 kann die Halterung 23 neben einer Bewegung parallel zum Wärmetauschernetz 2 auch in einem gewissen Ausmaß Bewegungen senkrecht zur Ebene des Wärmetauschernetzes 2 (parallel zur Luftdurchströmungsrichtung L) durchführen. Dadurch ist es besonders einfach möglich, gewisse Lagertoleranzen auszugleichen. Weiterhin ist es möglich, dass die Verbindungselemente 24 gleichzeitig mit Führungselementen 14 für eine Führungskulisse 13 verbunden sind, oder aber als kombinierte Verbindungselemente 24 und Führungselemente 14 ausgebildet sind.

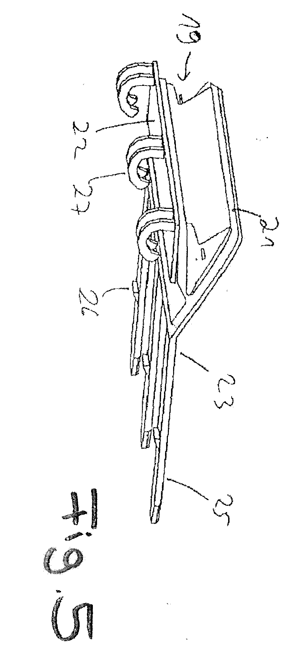

In Fig. 5 ist eine besonders vorteilhafte Ausführung des in Fig. 4 dargestellten Luftbalgs 19 in perspektivischer Ansicht dargestellt. Deutlich zu erkennen sind mehrere Hakenelemente 27, welche einstückig an der Bodenplatte 22 angeformt sind. Diese können mit den Halterungen 23 der Luftjalousie 3 verbunden werden. Weiterhin ist gut zu erkennen, dass die Halterung 23 mehrere vorspringende Stege 25 aufweist, die jeweils an ihrer Unterseite mit Widerhaken 26 versehen sind. Die vorspringenden Stege 25 können dadurch seitlich auf ein Wärmetauschernetz 2 aufgeschoben werden (gegebenenfalls sind im Wärmetauschernetz 2 spezielle Aufnahmekanäle vorgesehen). Durch die Widerhaken 26 verrastet die Halterung 23 clipsartig mit dem Wärmetauschernetz 2, sodass die Luftbalgen 19 fest am Wärmetauschernetz 2 befestigt sind.

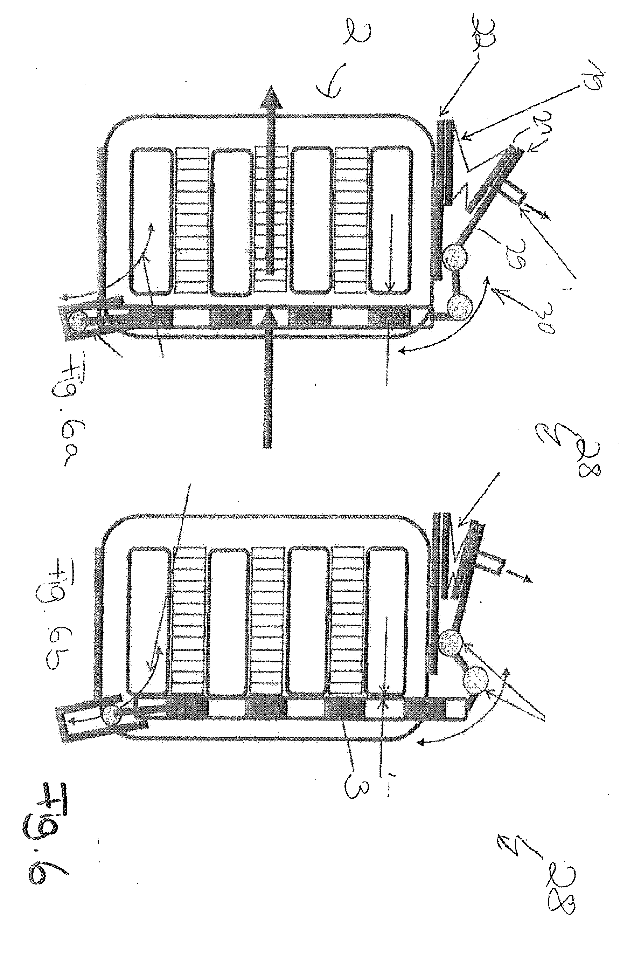

In Fig. 6 ist ein weiteres Ausführungsbeispiel für einen Wärmetauscher 28 in einer Luftdurchtrittsstellung (Fig. 6a) sowie einer Luftsperrstellung (Fig. 6b) jeweils in schematischer Querschnittsdarstellung dargestellt. Das vorliegend dargestellte Ausführungsbeispiel des Wärmetauschers 28 ähnelt dem in Fig. 4 dargestellten Ausführungsbeispiel 18. Auch ähnelt sich der in den beiden Ausführungsbeispielen 18, 28 jeweils verwendet Luftbalg 19. Der Luftbalg 19 ist jedoch mit seiner Deckplatte 21 bzw. seiner Bodenplatte 22 mit einer abweichend ausgebildeten Halterung 29 am Wärmetauschernetz 2 befestigt. Wie man Fig. 6 entnehmen kann, ist die Halterung 29 derart ausgebildet, dass sie eine Expansionsbewegung bzw. Kontraktionsbewegung des Luftbalgs 29 über eine Gelenkanordnung 30 in eine lineare Verschiebebewegung der Luftjalousie 3 umsetzt.

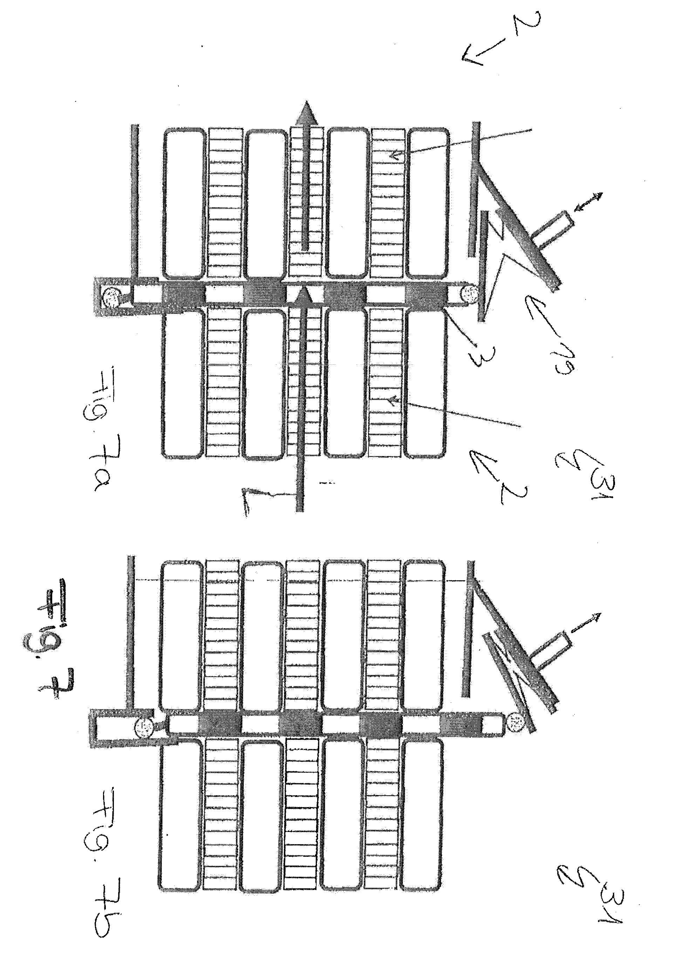

In Fig. 7 ist eine weitere Modifikation der in Fig. 4 dargestellten Anordnung in einer Luftdurchtrittsstellung (Fig. 7a) sowie in einer Luftsperrstellung (Fig. 7b), ebenfalls jeweils im schematischen Querschnitt dargestellt. Wie man Fig. 7 entnehmen kann, ist vorliegend eine Wärmetauscheranordnung 31 aus zwei einzelnen Wärmetauschernetzen 2 dargestellt. Die Wärmetauschernetze 2 sind auf den beiden Seiten einer Luftjalousie 3 angeordnet. Wie man Fig. 7 entnehmen kann, bewirkt die dargestellte Form der Anordnung, dass die (einzelne) Luftjalousie 3 den Luftdurchtritt L durch beide Wärmetauschernetze 2 hindurch regeln kann. Dadurch kann mit relativ geringem Regelaufwand ein besonders großer Effekt erzielt werden.

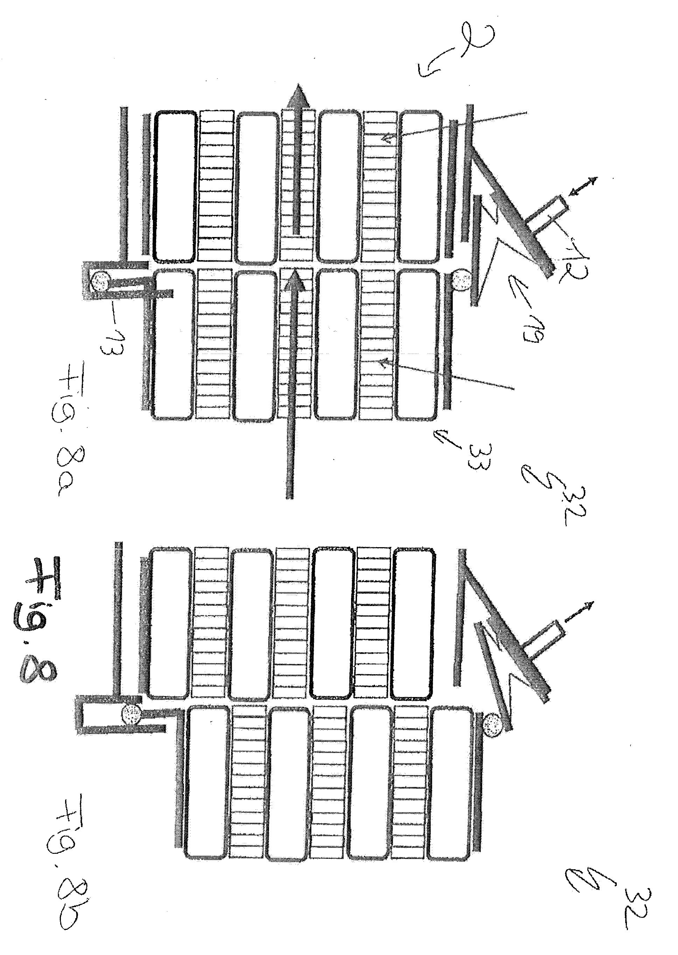

Schließlich ist noch in Fig. 8 eine weitere Modifikation einer Wärmetauscheranordnung 32 in einer Luftdurchtrittsstellung (Fig. 8a) sowie in einer Luftsperrstellung (Fig. 8b) jeweils in schematischer Ansicht dargestellt. Bei der Wärmetauscheranordnung 32 sind zwei Wärmetauschernetze 2, 33 vorgesehen, von denen ein erstes Wärmetauschernetz 2 starr befestigt ist, während ein zweites Wärmetauschernetz 33 beweglich angeordnet ist. Die Wärmetauschernetze 2, 33 können seitlich gegeneinander verschoben werden. Um die Bewegung der beiden Wärmetauschernetze 2, 33 gegeneinander zu bewirken, ist ein Luftbalg 29 vorgesehen, dessen Funktion bereits vorab beschrieben wurde. Weiterhin ist eine Führungskulisse 13 vorgesehen, die den Abstand der beiden Wärmetauschernetze 2, 33 zueinander steuert.

Bei der in Fig. 8 dargestellten Wärmetauscheranordnung 32 kann eine gegenüber der in Fig. 7 dargestellten Wärmetauscheranordnung 31 nochmals verringerte Bautiefe erzielt werden. Als gegebenenfalls nachteilig erweist es sich jedoch, dass eine der beiden Wärmetauschernetze, vorliegend das zweite Wärmetauschernetz 33, beweglich angeordnet sein muss. Dies kann es gegebenenfalls erforderlich machen, dass der Luftbalg 19 größer bzw. stärker ausgebildet werden muss. Darüber hinaus kann sich der Fluidanschluss des beweglichen, zweiten Wärmetauschernetzes 33 als relativ komplex erweisen.

### Bezugszeichenliste

- 1.: Wärmetauscher
- 2.: Wärmetauschernetz
- 3.: Luftjalousie
- 4.: Wärmetauscherrohre
- 5.: Wellrippe
- 6.: Steg
- 7.: Ausnehmung
- 8.: Wärmetauscher
- 9.: Koppelelement
- 10.: Aktuator
- 11.: Luftbalg
- 12.: Verbindungsflansch
- 13.: Führungskulisse
- 14.: Führungselement
- 15.: Wärmetauscher
- 16.: Klemmschutz
- 17.: Spiralfeder
- 18.: Wärmetauscher
- 19.: Luftbalg
- 20.: elastische Seitenwände
- 21.: Deckplatte
- 22.: Bodenplatte
- 23.: Halterung
- 24.: Verbindungselement
- 25.: Stege
- 26.: Widerhaken
- 27.: Hakenelemente
- 28.: Wärmetauscher
- 29.: Halterung
- 30.: Gelenkanordnung
- 31.: Wärmetauscheranordnung
- 32.: Wärmetauscheranordnung
- 33.: Bewegliches Wärmetauschernetz

## Patentansprüche

1. Wärmeübertragervorrichtung (1, 8, 15, 18, 28, 31, 32), insbesondere Wärmeübertragervorrichtung für Kraftfahrzeuge, aufweisend zumindest ein flächig ausgebildetes Wärmeübertragungsnetz (2, 33) sowie zumindest eine von zumindest einem Aktuator (10, 11, 19) veränderbare Luftströmungsbeinflussungsvorrichtung (3, 33), **dadurch gekennzeichnet, dass** zumindest eine Luflströmungsbeeinflussungsvorrichtung (3, 33) in einem Außenbereich der Wärmeübertragervorrichtung (1, 8, 15, 18, 28, 31, 32) ausgebildet ist.

2. Wärmeübertragervorrichtung (1, 8, 15, 18, 28, 31, 32) nach Anspruch 1, **dadurch gekennzeichnet, dass** zumindest eine der in einem Außenbereich der Wärmeübertragervorrichtung (1, 8, 15, 18, 28, 31, 32) ausgebildeten Luftströmungsbeeinflussungsvorrichtungen (3, 33) vor und/oder hinter dem Wärmeübertragungsnetz (2, 33) angeordnet ist.

3. Wärmeübertragervorrichtung (1, 8, 15, 18, 28, 31, 32) nach Anspruch 1 oder 2, **dadurch gekennzeichnet, dass** zumindest ein Aktuator (10, 11, 19) als fluidbefüllbare, volumenveränderliche Einrichtung (11, 19) ausgebildet ist, welche bevorzugt zumindest teilweise in einem Umfangbereich des Warmeübertragungsnetzes (2, 33) angeordnet ist.

4. Wärmeübertragervorrichtung (1, 8, 15, 18, 28, 31, 32) nach einen der vorangehenden Ansprüche, **dadurch gekennzeichnet, dass** zumindest eine volumenveränderliche Einrichtung (11, 19) als Balgelement (11, 19) ausgebildet ist und/oder als winkelveränderliche keilförmige Einrichtung (19) ausgebildet ist.

5. Wärmeübertragervorrichtung (1, 8, 15, 18, 28, 31, 32) nach einem der vorangehenden Ansprüche, **dadurch gekennzeichnet, dass** zumindest eine volumenveränderliche Einrichtung (11, 19) als formschlüssig befestigbare Einrichtung (25, 26), insbesondere als steckbare (25) und/oder clipsbare Einrichtung (26) ausgebildet ist.

6. Wärmeüberiragervorrichtung (1, 8, 15, 18, 28, 31, 32) nach einem der vorangehenden Ansprüche, **dadurch gekennzeichnet, dass** die Wärmeübertragervomchtung (1, 8, 15, 18, 28, 31, 32) zumindest bereichsweise als Ladeluftkühler und/oder als Abgaskühler ausgebildet ist.

7. Wärmeübertragervorrichtung (1, 8, 15, 18, 28, 31, 32) nach einem der vorangehenden Ansprüche, **dadurch gekennzeichnet, dass** die Fluidrohre (4) und die Luftdurchthttsbereiche (5) zumindest eines Wärmeübertragungsnetzes (2, 33) zumindest bereichsweise äquidistant (b, d) ausgebildet sind.

8. Wärmeübertragervorrichtung (1, 8, 15, 18, 28, 31, 32) nach einem der vorangehenden Ansprüche, **dadurch gekennzeichnet, dass** zumindest Teile zumindest einer Luftströmungsbeeinflussungsvorrichtung (3, 33) verschiebbar (A) angeordnet sind.

9. Wärmeübertragervorrichtung (1, 8, 15, 18, 28, 31, 32) nach einem der vorangehenden Ansprüche, **dadurch gekennzeichnet, dass** zumindest eine Luftströmungsbeinflussungsvorrichtung (3, 33) zumindest bereichsweise als eine Luftdurchtrittsöffnungen (5, 7) aufweisende Einrichtung (3, 33) ausgebildet ist, insbesondere als gitterartige Jalousieneinrichtung (3).

10. Wärmeübertragervorrichtung (1, 8, 15, 18, 28, 31, 32) nach dem Oberbegriff von Anspruch 1, insbesondere nach einem der vorangehenden Ansprüche, **gekennzeichnet durch** zumindest eine Klemmschutzeinrichtung (16), welche bevorzugt zwischen zumindest einem Aktuator (10, 11, 19) und zumindest einer Luftströmungsbeinflussungsvorrichtung (3, 33) angeordnet ist.

11. Wärmeübertragervorrichtung nach Anspruch 10, **dadurch gekennzeichnet, dass** zumindest eine Klemmschtzeinrichtung (16) ein elastisch verformbares Element (17), insbesondere eine Federeinrichtung, bevorzugt eine Spiralfeder (17), aufweist.

12. Wärmeübertragervorrichtung (1, 8, 15, 18, 28, 31, 32) nach dem Oberbegriff von Anspruch 1, insbesondere nach einem der vorangehenden Ansprüche, **dadurch gekennzeichnet, dass** zumindest eine Luftströmungsbeeinflussungsvorrichtung (3, 33) als Wärmeübertragervorrichtung (33) ausgebildet ist.

13. Wärmeübertragervorrichtung (1, 8, 15, 18, 28, 31, 32) nach Anspruch 12, **dadurch gekennzeichnet, dass** zumindest zwei der Wärmeübertragervorrichtungen (2, 33) gleichartig ausgebildet sind.
